Europäisches Patentamt

European Patent Office

Office européen des brevets

(11) Publication number : **0 519 888 A1**

# EUROPEAN PATENT APPLICATION

(21) Application number : **92830323.9**

(22) Date of filing : **18.06.92**

(51) Int. Cl.⁵ : **F16L 55/033**

(30) Priority : **19.06.91 IT BS910064**

(43) Date of publication of application :
**23.12.92 Bulletin 92/52**

(84) Designated Contracting States :
**AT BE CH DE DK ES FR GB GR IT LI LU MC NL PT SE**

(71) Applicant : **GALATRON S.r.l.**
**22 Via Dell'Artigianato**
**I-46043 Castiglione d/Stiviere (Mantova) (IT)**

(72) Inventor : **Orlandi, Alessio**
**Via Dell'Artigianato 22**
**I-46043 Castiglione D/Stiviere (Mantova) (IT)**

(74) Representative : **Manzoni, Alessandro**
**MANZONI & MANZONI - UFFICIO**
**INTERNAZIONALE BREVETTI P.le Arnaldo n. 2**
**I-25121 Brescia (IT)**

(54) **Sound damper for hydrosanitary plants.**

(57)   The invention regards a sound damper or silencer for eccentric unions, conduits or devices designed for the passage of water, consisting of a casing having the shape of a tubular sleeve made of elastic plastic material or rubber having two coaxial walls (13,14) spaced the one from the other, one Inner wall (13) defining an axial hole (15) with a conical development tapering in the direction of the fluid flow crossing it, and an outer wall (14) which is closely connected (16) to the inner one at the extremity of the casing or sleeve where the axial conical hole (15) is bigger, between one wall and the other being obtained some openings or spaces (17) open towards the extremity of the casing or sleeve where the axial hole (15) is smaller and closed on the opposite side.

Fig. 4

EP 0 519 888 A1

Jouve, 18, rue Saint-Denis, 75001 PARIS

The present invention comes within the field of eccentric unions, conduits or devices designed for the passage of a fluid, mainly water, for sanitary plants and similar ones. More precisely, the invention regards a sound damper made of elastic material for accessories of hydrosanitary plants.

At present, noise dampers, or silencers, are known to be employed in the above mentioned field, consisting of a tube segment fit into a water conduit and designed to withstand variations in pressure and/or sound vibrations of water. However, said execution has a limited efficacy, gives rise to assembly and tightness problems and tends to affect negatively water flow and flow rate.

A silencer example is illustrated in FR-A-2374 582. This realization essentially makes use of the presence of chambers outside the tubular segment, between the latter one and the conduit, to deaden pressure and vibrations.

The present invention aims at solving the problem of sound dampening of a fluid flow in a new and original way through a specifically structured element, without any particular attention to assembly and tightness and principally without affecting water flow rate. The structure of the sound deadening element is provided with some openings or hollow spaces allowing the element adjustment to the flow conditions of the fluid and the absorption, through dilatation and/or contraction, of variations in pressure and sound vibrations which may occur in the conduit.

The sound dampening element proposed herein, and in accordance with the present invention, has substantially the shape of a tubular sleeve made of elastic plastic material or rubber and is provided with two coaxial walls, spaced one from the other; the inner wall defines an axial hole with a conical development tapering in the direction of the fluid flow, the outer wall is connected to the inner one at the extremity of the element where the conical axial hole is bigger. Some openings or hollow spaces, which are open towards the extremity of the element where the axial hole is smaller and closed on the opposite side, are obtained between one wall and the other.

Anyway, more details about the invention can be inferred from the description given below with reference to the drawings enclosed only for indication and non-limiting purposes, in which:

fig. 1 is a perspective view of the silencer;

fig. 2 is a perspective view of the silencer fit into a first type of eccentric union;

fig. 2a is an analogous view of the silencer fit into another type of eccentric;

fig. 3 shows a longitudinal section of the silencer in operation in an eccentric of the type shown in fig. 2; and

fig. 4 shows a section of the silencer with an illustration of the action and reaction forces in presence of a fluid flow.

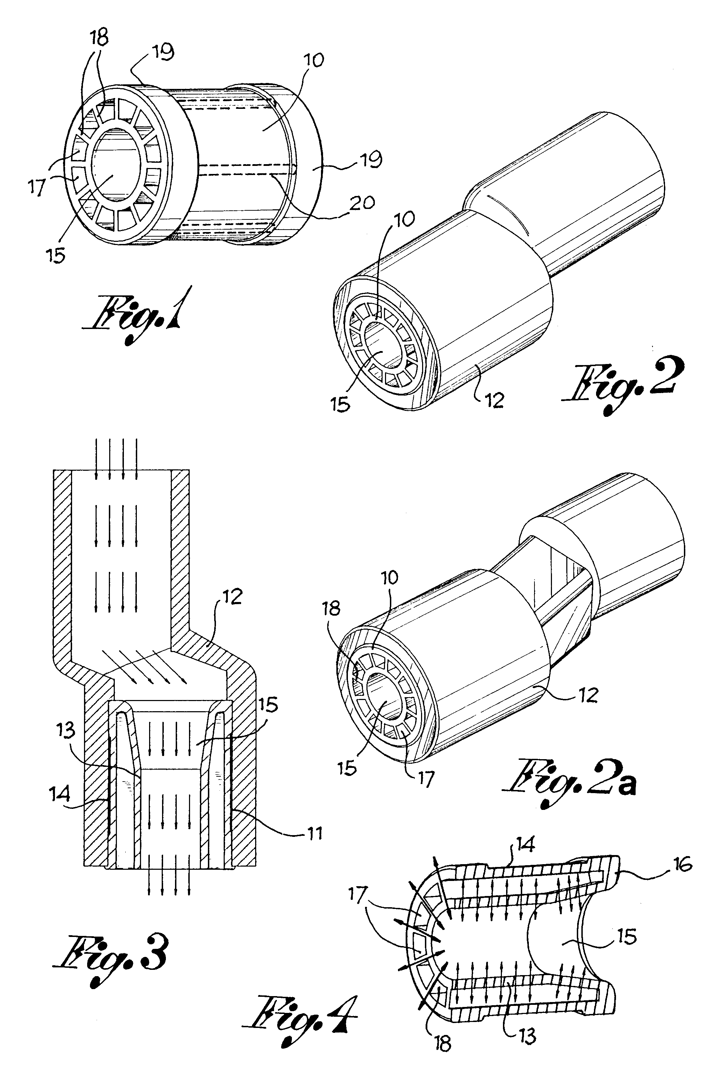

The sound damper or silencer being examined consists of a tubular sleeve-shaped casing 10 and is fit into a corresponding housing 11 obtained in a water passage element such as an eccentric union 12 or any other component part. The eccentric union 12 can be of the type shown in fig. 2 or of the type shown in fig. 2a or even different.

The casing or sleeve 10 is made of elastic plastic material or rubber with an opportune degree of hardness. It is provided with two coaxial walls, one inner wall 13 and one outer wall 14, spaced one from the other. The inner wall 13 defines an axial hole 15 having at least partially a conical development and narrows in the direction of the fluid flow crossing it. In other words, the water flow enters the silencer from the bigger side of the axial hole 15 and flows from the opposite, tapered side.

The inner wall and the outer wall 13, 14 are closely connected one to the other in 16, at the extremity of the casing or sleeve 10 where the axial hole 15 is bigger, i.e. where water enters the silencer. On the other hand, the inner wall and the outer wall 13,14 define an opening or hollow space which can be subdivided into a plurality of openings 17 by a multiplicity of flexible tongues 10 connecting the walls radially. The space or hollow space and correspondingly the openings 17 in which it is subdivided by the tongues 18 are closed towards the extremity of the casing in opposite direction of the fluid flow and open towards the extremity of the casing or sleeve where the axial hole 15 is smaller, i.e. where water flows from the silencer.

In the end, the outer wall 14 can show peripherically some projecting collars 19 which should be at least adjacent to the extremities of the casing or sleeve and act as gaskets for tight assembly of the silencer in the housing of the element 12.

According to the material and elasticity of the casing or housing 10, along the generatrices of the latter it is possible to design some longitudinal ribs 20 between the collars 19 as shown with sketched lines in fig. 1 of the drawing.

When fit into the respective housing of the element crossed by a fluid flow as shown in fig. 3, the inner wall 13 and the radial tongues 18 are subject to action and reaction forces depending upon water pressure or variations in pressure and un sound vibrations due to flow which deaden the system noisiness, thus reducing it efficaciously.

On the other hand, the form and dimensions of the axial hole and the flexibility of the inner wall are designed so as not to affect the fluid delivery.

**Claims**

1) Sound damper or silencer for eccentric unions, conduits or devices designed for the passage of a fluid, mainly water, consisting of a casing having the shape of a tubular sleeve made of elastic plastic material or rubber of appropriate hardness, characterized in that said casing or sleeve (10) shows two coaxial walls (13,14) spaced one from the other, one inner wall (13) defining an axial hole (15) with a conical development tapering in the direction of the fluid flow crossing it, and an outer wall (14) which is closely connected (16) to the inner one at the extremity of the casing or sleeve where the axial conical hole (15) is bigger, and in that between the inner and the outer wall (13,14) some openings or spaces (17) are obtained which are open towards the extremity of the casing or sleeve where the axial hole (15) is smaller and closed on the opposite side.

2) Sound damper or silencer according to claim 1, in which the inner and outer coaxial walls (13,14) define a hollow space subdivided into several openings (17) by a plurality of flexible tongues (18) connecting one wall to the other radially.

3) Sound damper or silencer according to claims 1) and 2), in which the axial hole (15) is at least partially conical and in which the openings (17) between one wall and the other are open only on the side towards which said axial hole is smaller.

4) Sound damper or silencer according to the preceding claims which introduces the fluid flow into a housing obtained in a conduit crossed by a fluid thus entering the silencer from the bigger side of the axial conical hole and leaving it from the opposite side, the openings (17) between one wall and the other being open only on the side where the fluid flows from the silencer.

Fig.1

Fig.2

Fig.3

Fig.2a

Fig.4

4

EP 0 519 888 A1

## European Patent Office

**EUROPEAN SEARCH REPORT**

Application Number

EP 92 83 0323

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-2 391 328 (FRIEDRICH GROHE ARMATURENFABRIK G M B H) * claims 1,2; figures 1,2 * | 1,2 | F16L55/033 |
| Y | FR-A-2 614 674 (MASCO CORPORATION) * abstract; figures 1-10 * | 1,2 | |
| A | FR-A-2 594 206 (KUGLER) * abstract; figures 1-7 * | 1,3 | |
| A | DE-A-3 711 429 (ROKAL ARMATUREN G M B H) * abstract; figures 1,2 * | 1 | |

|  |  |  | TECHNICAL FIELDS SEARCHED (Int. Cl.5 ) |
|---|---|---|---|
|  |  |  | F16L |

The present search report has been drawn up for all claims

| Place of search | Date of completion of the search | Examiner |
|---|---|---|
| THE HAGUE | 01 OCTOBER 1992 | ANGIUS P. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)